# EUROPEAN PATENT APPLICATION

(11) **EP 2 260 697 A1**
(43) Date of publication of application: **15.12.2010**
(21) Application number: 10165679.1
(22) Date of filing: 11.06.2010
(51) Int. Cl.: A01K 1/03

(54) **Ventilated shelving storage system for the housing of laboratory animals comprising a filter unit**

(30) Priority: 12.06.2009 IT MI20091045
(71) Applicant: TECNIPLAST S.p.A., 21020 Buguggiate, Varese (IT)
(72) Inventor: Tamborini, Paolo, 21010, CARDANO AL CAMPO (IT); Cenzato, Francesco, 21040, SUMIRAGO (IT)
(74) Representative: Borsano, Corrado

(57) **Abstract**

The present invention relates to a ventilated shelving storage system for housing laboratory animals.

The ventilated shelving storage system according to the present invention is of the type suitable for being connected to the centralised air circulation system of a building, or of the room where the shelving storage system is located, while at the same time each shelving storage unit is designed to have its own filter unit comprising at least one antiparticulate filter.

Another object of the present invention is a system of shelving storage units in series suitable for being connected to a centralised air circulation system and comprising an antiparticulate filter unit.

## Description

The present invention concerns a ventilated shelving storage system for housing laboratory animals.

It is common knowledge that ventilated shelving storage units are currently known and used for housing laboratory animals that enable a plurality of trays containing animals to be arranged in a tidy manner. It is also a well known fact that the shelving storage units in question also cater for the need to ensure air circulation inside the trays containing the animals, and preventing said air from being released into the atmosphere.

For this purpose, the trays for containing the animals are known to be fitted with at least two valves, one for delivering and one for discharging the air supply, while the shelving storage unit comprises at least one line, or plenum for delivering clean air into the containment trays and one line, or plenum for conveying the foul air away from the trays.

It is well known that particular care must be taken to treat the foul air leaving the tray, because it could be contaminated by pathogens contained in the trays. Moreover, the foul air coming from the trays often contains solid substances in the form of airborne particles and/or microparticles deriving from the solid substances and from the dust generally existing in the trays.

The air delivered to the trays must be filtered to comply with the required quality standards so as to ensure that the animals are always kept in an environment with controlled characteristics. For this purpose, the shelving storage units are generally fitted with an air circulation system that delivers air to the clean air plenum only after it has been prefiltered and treated with a HEPA (high efficiency particulate air) filter, which is capable of retaining any airborne particles over 0.3 µm in diameter.

There are currently known types of individual shelving storage units that are fitted with a ventilation unit, which filters and controls the air delivered to the trays by means of the clean air plenum in the shelving storage unit, and which also filters the air leaving the trays. The air supply to the ventilated shelving storage unit generally comes from the room and the air discharged from the ventilated shelving storage unit is returned to the room or carried outside, after suitable filtering by the ventilation unit. As mentioned previously, the air discharged from the tray, in particular, must be accurately treated and that is why the individual ventilated shelving storage units must include a filter unit integrated in the ventilation means.

Thus, in the case of animal housing systems that comprise a plurality of ventilated shelving storage units, the individual shelving storage units must be fitted each with their own ventilation unit. That is why centralised systems are available on the market, in which a plurality of ventilated shelving storage units are connected directly to the building's centralised air circulation system instead of a ventilation unit being provided for each shelving storage unit, and each ventilation unit using the conditioned air in the room.

Each ventilated shelving storage unit of the centralised system is consequently fitted with suitable clean air ducts for delivering the air supply to the shelving storage units from the building's centralised system, and similarly with foul air ducts for discharging the foul air from the shelving storage units and returning it to the centralised system. In these cases, the building's centralised air circulation system is generally known to include an antiparticulate filter coming before the foul air, which may contains pathogens, is released into the outside environment.

This solution of known type has several drawbacks, however.

A first drawback lies in that the foul air discharged from the shelving storage units that are installed in series along the ducts of the building's air circulation system sometimes, for the shelving storage units furthest away from the air outlet, travels through lengthy stretches of the centralised air circulation ducts before it is discharged into the outside atmosphere. This gives rise to the deposition of the microparticles suspended in the foul air leaving the shelving storage unit at various points along the ducts of the centralised air circulation system.

Similarly, a second drawback concerns the accumulation of said airborne dust in the foul air on a level with connections linking the return piping from the individual shelving storage units to the centralised system, and also in line with the valves installed along said ventilation ducts to maintain a constant flow rate.

The main technical aim of the present invention is consequently to eliminate or reduce the drawbacks affecting the centralised systems of ventilated shelving storage units for housing laboratory animals.

In the context of this aim, one object of the present invention is consequently to avoid the accumulation of dust and solid particulate in the ducts and in the devices for conveying the foul air discharged from the shelving storage unit.

Another object of the present invention is to make the functionality of the centralised systems of ventilated shelving storage units more economical and efficient by combining the economical advantages deriving from the greater simplicity of the ventilation system characteristic of the centralised systems with the greater functionality and efficiency of the ventilation and filtering systems used in the case of individual shelving storage units.

This aim, and these and other objects, that will emerge more clearly below, are achieved by a ventilated shelving storage system for housing laboratory animals of the type comprising means for the connection of the ventilation ducts from the shelving storage units to a centralised air circulation system installed in the building, or in the room where said shelving storage system is located, and that is characterised in that it comprises a least one filter unit, positioned downstream (in relation to the direction of the airflow) from a duct for collecting the foul air coming from the shelving storage system and upstream from the point where the filtered foul air is returned to the centralised air circulation circuit.

Further characteristics and advantages of the present invention become more evident from the detailed description given below as a non-limiting example and illustrated in the attached figures, wherein:
figure 1 shows a perspective overall view of the ventilated shelving storage system according to the present invention;
figure 2 shows an exploded view of the filter element forming part of the ventilated shelving storage system according to the present invention;
figure 3 shows several, respectively frontal, lateral and cross-sectional views, as stated in the drawings concerned, of the filter element in figure 2;
figure 4 shows a detail of the filter element of figures 2 and 3.

According to a preferred embodiment of the present invention, illustrated in the above-mentioned figures as a non-limiting example, the ventilated shelving storage system **1** comprises a load-bearing structure **2** suitable for supporting in a tidy array a plurality of trays **3** for containing laboratory animals, and it also comprises means for connecting the ventilation ducts for said ventilated shelving storage system **1** to the supply and return lines of the centralised air circulation system installed in the building or room where the animal housing system is located.

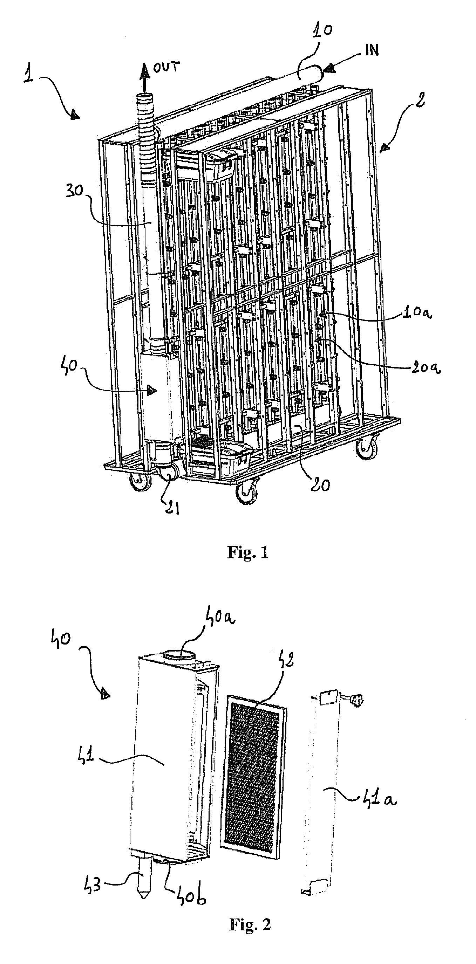

Said means for connecting the ventilation ducts for the ventilated shelving storage system to the centralised air circulation system comprise at least one clean air delivery duct **10** that is oriented towards the vertical ducts **10a** for delivering air to the trays **3,** a plurality of suitable valves being provided on said ducts designed to co-operate with corresponding air inlet valves provided on the rear wall of the trays **3.** The delivery duct **10** is connected to the centralised air circulation system by means of a further duct, not shown in the figure, so that the air supplied to the delivery duct **10,** indicated by the arrow **IN** in Figure 1, is clean air coming from the centralised air circulation system.

Similarly, a plurality of vertical ducts **20a** for the air discharged from the trays **3** convey the foul air from the trays into the return air duct or horizontal plenum **20.**

As shown in Figure 1, the plenum or horizontal duct **20** is also connected to the building's centralised air circulation system, which generally (and consequently also in the example shown in the figures) runs in line with the ceiling of the room where the animal housing system is located, and a connecting duct **21** is consequently provided for this purpose, which links the horizontal plenum **20** to the air exhaust piping **30,** through which the air is released as indicated by the arrow **OUT** in Figure 1. Here again, the means for connecting the ventilation circuit of the shelving storage system **1** to the centralised air circulation system consequently also include, in addition to the exhaust piping **30,** a further connecting duct, not shown in the figures, that links the exhaust piping **30** to the building's centralised air circulation system.

Again with reference to figure 1, the connector **21** conveys the air from the horizontal plenum **20** to a filter unit **40,** that filters the air coming from the ventilated shelving storage system and flowing towards the exhaust piping **30,** and from there to the centralised air circulation system. According to the preferred embodiment of the present invention shown in figures 2, 3 and 4, the filter unit **40** comprises a box-shaped containment structure **41** advantageously fitted with a cap or removable wall **41a** to give ready access to one or more filter elements **42** contained inside said body **41.**

The filter element, or each of the filter elements if there are more than one, is generically indicated in the figures by the reference number **42** and advantageously consists of a frame supporting a material suitable for filtering the particles contained in the foul air. Thus, the filter element **42** is easily removable from the holding body **41** because it is simply supported by suitable means that enable its manual withdrawal for regular cleaning or replacement by the operator.

The shape and the degree of separation of the filter elements can vary according to need, depending on the size of the ventilated shelving storage system, the level of pollution predicted in the air and various other parameters, based on experience.

The filter unit **40** includes a port **40a** for connecting the filter unit to the exhaust piping **30** in line with the upper portion of the holding body **41,** and in line with the lower portion of the holding body **41** there is a port **40b** for connecting it to the connector **21,** which in turn is connected to the horizontal plenum **20.**

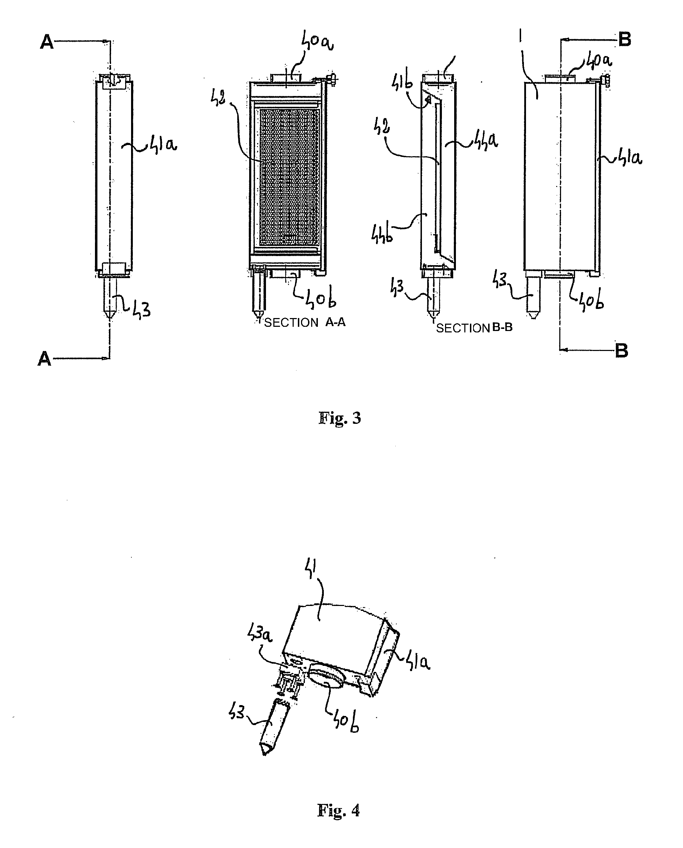

With particular reference to the cross-section **B-B** in figure 3, the internal architecture of the holding body **41** is such that the foul air coming from the lower port **40b** is conveyed so that it passes through the filtering surface of the element **42** and is then conveyed so that it emerges from said holding body **41** through the port **40a.** Inside the box-shaped body **41** there is consequently a separation septum **41 b** suitable for separating a first zone **44a** communicating with said port **40a** from a second zone **44b** communicating with the port **40b.** The zone **44a** where the air is carried towards the outlet port **40a** is separated by said septum **41 b** from said zone **44b** where the foul air entering through the port **40b** circulates, said septum being suitable for supporting said filter element **42.** The foul air entering the body **41** through the port **40b** is consequently obliged to pass through the filter element **42** before it can flow into the zone **44a** and, after it has been cleaned, it leaves the holding body **41** of the filter unit **40** through the port **40a.**

The filter unit **40** can also include a device **43** for sampling the particulate collected, installed in line with the bottom surface of said holding body **41,** in the vicinity of the foul air inlet port **40b.**

The device **43** for sampling the filtered particulate being collected, due to the filtering action of the filter element **42,** inside the foul air zone **44b** of the filter unit **40,** advantageously consists of a test tube or similar vessel removably connected to the outer surface of the bottom wall of the box-shaped body **41,** as shown in Figure 4 in particular, which shows a connection by means of screws and by means of a retainer element **43a,** that enables the easy attachment and detachment of the test-tube **43** to and from the bottom surface of the holding body **41.** The test tube **43** is attached to the bottom surface of the holding body **41** in line with a through hole of dimensions suitable for enabling the dust to pass from the zone **44b** into the test-tube **43.**

The device **43** enables the operator to monitor the composition of the filtered particulate in a simple and effective manner without necessarily having to open the side **41a,** thus also enabling a check on any presence of pathogens as well as other parameters, according to the operator's needs.

It has thus been demonstrated that the ventilated shelving storage system according to the present invention achieves the previously-stated aim and objects.

In particular, it has been shown that the ventilated shelving storage system according to the present invention makes the functionality of the centralised systems of ventilated shelving storage units more economical and more efficient by combining the economic advantages deriving from the greater simplicity of the ventilation system characteristic of centralised systems with the greater functionality and efficiency of the ventilation and filtering systems used in the case of individual ventilated shelving storage units.

Although the ventilated shelving storage system according to the present invention is connected to the building's centralised air circulation system, and there is consequently no need for each ventilated shelving storage system to have its own ventilation unit, fitting each ventilated shelving storage unit with a filter or separator unit, involving a filter unit comprising at least one antiparticulate filter, it enables the separation of the majority of the particles carried by the foul air coming from the trays containing the animals, irrespective of whether said shelving storage units are connected to the centralised air circulation system for the whole building or for the single room. Thus, the majority of the dust is intercepted immediately downstream from the horizontal plenum 20 that collects the air coming from the trays, thereby strongly limiting, by comparison with the known art, the amount of dust contained in the return air that can soil and contaminate the ventilation ducts, and thereby also achieving the result of preserving the valves, sensors, instruments and mechanisms installed in the air circulation system. The use of the ventilated shelving storage system according to the present invention is consequently further advantageous in that it enables a reduction in the need for servicing activities on the ventilation system in general, and on the final filters, which are always included before the air is released into the atmosphere.

Moreover, the presence of the antiparticulate filter unit according to the present invention enables, where necessary, the collection of samples of the dust, or of the biochemical material carried by the airborne particles in the foul air coming from the trays in the shelving storage system. The samples that can be collected thanks to the presence of the dust collection device 43 enable the monitoring of the biological mass of each shelving storage system.

The term ventilated shelving storage system used in the present description is intended to mean both an individual shelving storage unit and a series of shelving storage units for which the plenums for the clean air 10 and foul air 20 are connected in series with one another. The present invention consequently also includes a system comprising a plurality of ventilated shelving storage units connected to one another in series and connected, upstream from the exhaust pipe 30 for discharging the foul air into the centralised air circulation system, to at least one filter unit according to the above description.

Numerous modifications may be made by a person skilled in the art without departing from the scope of protection of the present invention.

The scope of protection of the claims shall consequently not be restricted by the figures nor by the preferred embodiments illustrated in the description given here as an example; instead, the claims shall be intended to include all the characteristics of patentable novelty deducible from the present invention, including all the characteristics that would be considered as equivalent by a person skilled in the art.

## Claims

1. Ventilated shelving storage system (1) for the housing of laboratory animals of the kind comprising means for the connection of shelving (1) ventilation ducts to an air circulation centralized system that, the building or the room wherein said shelving system is located, is supplied with, **characterized in that** it further comprises at least a filter unit (40) located, with respect to the direction of the air flow, downstream of a duct (20) for collecting foul air coming from the cabinet and upstream of the reintake point of filtered foul air in the centralized circuit of air circulation.

2. Ventilated shelving storage system (1) according to the preceding claim, **characterized in that** said means for the connection of shelving (1) ventilation ducts to an air circulation centralized system are connected at least to a delivery duct (10) for clean air entering the cabinet and to at least an exhaust piping (30) for foul air leaving the cabinet (1).

3. Ventilated shelving storage system (1) according to the preceding claim, further **characterized in that** said exhaust piping (30) receives the air from a plenum or a duct (20) for the air taken back from the cabinet, said filter unit (40) being located between said duct (20) for taken back air and said air exhaust piping (30) in the air circulation centralized circuit.

4. Ventilated shelving storage system (1) according to one or more of the preceding claims, **characterized in that** said filter unit (40) comprises at least an antiparticulate filter element (42).

5. Ventilated shelving storage system (1) according to one or more of the preceding claims, **characterized in that** said filter unit (40) comprises at least a holding body (41) suitable to hold said filter element (42), said main body (41) further comprising at the top part of said body of the holding body (41) at least a port (40a) for the connection of the filter unit (40) to the exhaust piping (30), and at the bottom part of said holding body (41) a port (40b) for the connection thereof to said duct (20) for taken back air.

6. Ventilated shelving storage system (1) according to one or more of the preceding claims, **characterized in that** said filter element (42) is kept in position by a separation septum (41 b) suitable to separate within said holding body (41) a first zone (44a) communicating with said port (40a) from a second zone (44b) communicating with said port (40b), said septum having a shape causing the foul air entering the vessel body (41) from the port (40b) to flow through the filter element (42) before being discharged through the port (40a).

7. Ventilated shelving storage system (1) according to one or more of the preceding claims, **characterized in that** said filter unit (40) further includes a device (43) for the sampling of the collected particulate.

8. Ventilated shelving storage system (1) according to the preceding claim, **characterized in that** said dust sampling device (43) comprises a vessel removably connected to the outer surface of the bottom wall of said holding body (41).

9. Ventilated shelving storage system (1) according to one or more of the preceding claims, **characterized in that** said holding body (41) further comprises at least a removable cap (41 a) suitable to allow an easy access to said filter element (42).

10. System comprising a plurality of ventilated shelving storage units for the housing of laboratory animals of the kind comprising means for the connection of the ventilation ducts of at least one of the shelving storage units of said system to an air circulation centralized system that, the building or the room, wherein said system is located, is supplied with, and **characterized in that** each of said ventilated shelving storage units comprises at least a ventilation circuit comprising in turn at least an inlet duct for clean air (10) and a duct (20) for taking back foul air from the shelving units, the system being **characterized in that** said ventilation circuits of the shelving units are series interconnected and **in that** at least a filter unit (40), with respect to the direction of the air flow, is provided downstream of one of said ducts (20) for taking back foul air coming from the shelving units and upstream of the reintake point of foul air filtered in the air circulation centralized circuit.
